# EUROPÄISCHE PATENTSCHRIFT

(11) **EP 0 826 403 B1**
(45) Veröffentlichungstag und Bekanntmachung des Hinweises auf die Patenterteilung: **06.08.2003**
(21) Anmeldenummer: 97114433.2
(22) Anmeldetag: 21.08.1997
(51) Int. Cl.: A63G 13/08, F16F 1/12

(54) **Spielgerät für Kinderspielplätze oder dergleichen**
Game apparatus for playgrounds for children or the like
Dispositif de jeu pour terrain de jeux pour enfants ou analogue

(30) Priorität: 29.08.1996 DE 19634945
(43) Veröffentlichungstag der Anmeldung: 04.03.1998
(73) Patentinhaber: ABC-Team Spielplatzgeräte GmbH, 56235 Ransbach-Baumbach (DE); Thema-Federn GmbH & Co. KG, 57402 Finnentrop (DE)
(72) Erfinder: Zingel, Hans-Walter, 56424 Mogendorf (DE); Plugge, Manfred, 57413 Finnentrop (DE)
(74) Vertreter: Kossobutzki, Walter, Dipl.-Ing.(FH)

(56) Entgegenhaltungen:
- DE-A- 4 421 148
- DE-U- 29 615 035
- FR-A- 2 676 935
- FR-A- 2 735 701

## Beschreibung

Die Erfindung bezieht sich auf ein Spielgerät für Kinderspielplätze oder dergleichen, bestehend aus einer mit einem Ende senkrecht auf einem festen Untergrund gesicherten Schraubenfeder, an deren anderem Ende ein Tragkörperr mit einem Sitz und einem Haltegriff befestigt ist.

Ein derartiges Spielgerät ist dem Annuelder bekannt.

Es sind Spielgeräte für Kinderspielplätze bekannt, die auch als Schaukel-, Wipp- oder Federgeräte bezeichnet werden und die auf mindestens einer senkrecht auf einem festen Untergrund gesicherten Schraubenfeder stehen. Für die Befestigung der Schraubenfeder auf dem Untergrund werden die unterschiedlichsten Bügel und Klammern mit Zwischenstücken verwendet, damit sich die Schraubenfeder auch bei extremster Belastung nicht so verformen kann, daß die Hände bzw. Finger von Kindern eingeklemmt werden. Das obere Ende der Schraubenfeder nimmt einen Tragkörper auf, der als Tier, Auto oder dgl. ausgebildet ist und der einen Sitz und einen Haltegriff aufweist. Auf diesem Tragkörper können dann die Kinder Wipp- bzw. Schaukelbewegungen ausführen. Auch für die Verbindung der Schraubenfeder mit dem Tragkörper werden die bereits erwähnten Bügel oder Klammern, gegebenenfalls mit Zwischenstücken, verwendet, um auch hier ein Einklemmen von Händen bzw. Fingern zu vermeiden. Bei allen bisher für derartige Spielgeräte verwendeten Schraubenfedern wird bei der Formgebung derselben jeweils die letzte Windung beigelegt und eben geschliffen, so daß die Feder eine ebene, senkrecht zur Federachse verlaufende Anlagefläche an beiden Enden besitzt. Diese Bearbeitung der Schraubenfeder ist mit einem verhältnismäßig hohen Aufwand verbunden. Durch das Beilegen der Endwindungen wird für die Schraubenfedern zusätzlicher Werkstoff benötigt. Die vorerwähnten Bügeln und Klammern und gegebenenfalls Zwischenstücke erfordern eine umständliche und zeitaufwendige Montage.

Die DE 44 21 148 A1 beschreibt eine Einrichtung zur Befestigung einer Feder an einem Spielgerät, bei der die Verbindung von Schraubenfeder und Untergrund und dem Spielgerät über jeweils zwei Befestigungssätze, die an gegenüberliegenden Seiten eine Federwindung angeordnet sind und der Steigung der Feder folgend unterschiedliche Höhen aufweisen, erfolgt. Die Befestigungssätze bestehen jeweils aus einem Unterteil unterschiedlicher Höhe und einem Oberteil, die miteinander über Bolzen oder Schrauben verbunden werden. In den Ober- und Unterteilen sind Nuten eingeformt, die ein vollständiges Umschließen der Feder und einen Formschluss der Ober- und Unterteile miteinander ermöglichen.

Die FR 2 676 935 beschreibt eine Aufnahme für Spiralfedern, bei der das letzte Teilstück der abschließenden Federwindung in der Nut einer Abschlussplatte geführt ist und durch zwei gegenüberliegende Schlaufen an der Aufnahme gehalten wird. Jedoch beschreibt die D2 keine Verspannung der Spiralfeder, insbesondere mittels einer Grund- und einer Klemmplatte, denn die Nuten gemäß der D2 dienen lediglich der Führung der Spiralfeder-Windung, die Haltekräfte werden ausschließlich von den Schlaufen aufgebracht.

Die FR 2 735 701 schließlich beschreibt ein tragbares als Spielgerät verwendbares Stadtmöbel, welches aus einer Bodenplatte, einer Spiralfeder und einem Aufbau besteht. Die Verbindung der Spiralfeder mit der Bodenplatte und dem Aufbau erfolgt hierbei über zwei verschieden hohe Spannelemente, die mit den Halteplatten verbunden werden. Jedoch beschreibt die D3 keine Grund- und Klemmplatte, in deren Nuten die Schraubenfeder geführt wird und mittels derer die Feder verspannt wird. Auch die Vorrichtung gemäß der D3 erlaubt ein Verkippen der Spiralfeder um eine parallel zu der Verbindungslinie der beiden Spannelemente verlaufende Drehachse.

Der Erfindung liegt deshalb die Aufgabe zugrunde, ein Spielgerät für Kinderspielplätze oder dergleichen zu schaffen, bei dem die verwendete Schraubenfeder preiswerter hergestellt und leichter montiert werden kann. Ferner soll eine dreh- und hippfeste lagerung der Schraubenfeder erzielt werden. Darüber hinaus sollen bei vorgegebener Federkennlinie die Federeigenschaften verbessert werden.

Zur Lösung dieser Aufgabe wird gemäß der Erfindung bei einem Spielgerät der eingangs beschriebenen Gattung vorgeschlagen, daß zwischen dem Untergrund und der Schraubenfeder und/oder zwischen dem Tragkörper und der Schraubenfeder eine Grundplatte mit zwei in Höhe der halben Steigung der Schraubenfeder mit Abstand gegeneinander versetzten Nuten mit sektorförmigem, dem Querschnitt der Schraubenfeder angepaßtem Querschnitt angeordnet ist, daß der Grundplatte eine gegen dieselbe spannbare Klemmplatte mit ebenfalls zwei entsprechend den Nuten der Grundplatte als Gegenstück geformten Nuten zugeordnet ist und daß das freie Ende der Schraubenfeder weitgehend verformungsfrei in den Nuten zwischen der Grundplatte und der Klemmplatte einspannbar ist.

Durch eine solche Ausgestaltung entfallen die bisher erforderlichen Bearbeitungsvorgänge der Schraubenfeder, was sich auf deren Preis auswirkt. Die Schraubenfeder kann jetzt bei verbesserten Federungseigenschaften mindestens eine Windung weniger aufweisen, was eine Materialersparnis und damit aber auch eine Kostenersparnis mit sich bringt. Die Montage des Spielgerätes wird vereinfacht und ist in kürzerer Zeit durchführbar. Dabei besteht grundsätzlich die Möglichkeit, die Schraubenfeder mit der Grundplatte und der Klemmplatte vorzumontieren.

Weitere Merkmale eines Spielgerätes gemäß der Erfindung sind in den Ansprüchen 2 bis 8 offenbart.

Die Erfindung wird nachfolgend anhand eines in einer Zeichnung dargestellten Ausführungsbeispieles näher erläutert. Dabei zeigen
- Fig. 1: die Befestigung eines Spielgerätes gemäß der Erfindung auf einem Untergrund und
- Fig. 2: eine Aufrißdarstellung einer Grundplatte.

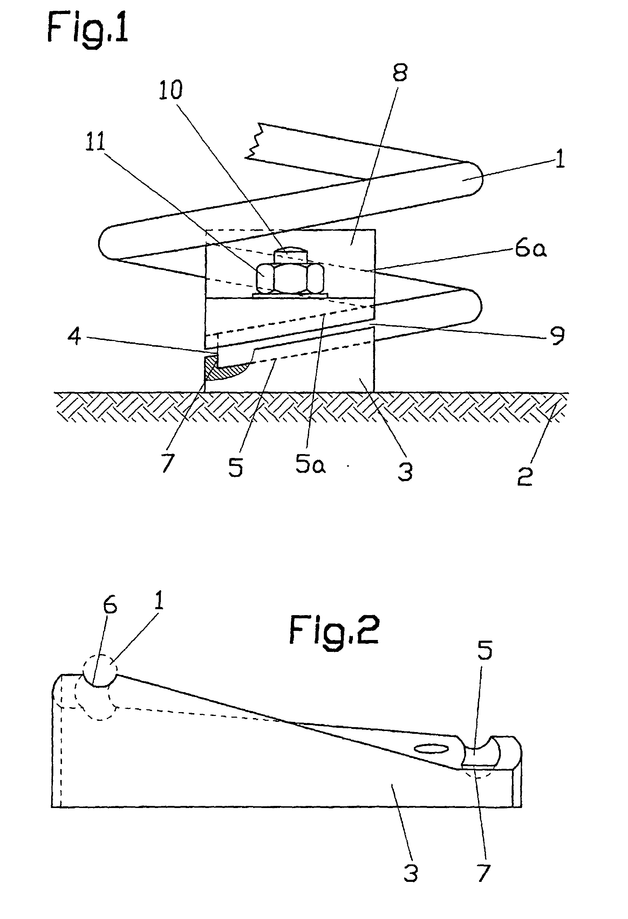

In der Fig. 1 der Zeichnung ist von einem an sich bekannten, schaukelnden bzw. federnden bzw. wippenden Spielgerät nur der untere Bereich einer Schraubenfeder 1 gezeigt, die mit diesem Ende auf einen festen Untergrund 2 befestigt ist. Das andere bzw. obere Ende der Schraubenfeder 1 nimmt einen beispielsweise als Tier geformten Tragkörper mit einem Sitz und einem Haltegriff auf, wobei der Tragkörper in gleicher Weise mit der Schraubenfeder 1 verbunden sein kann, wie dies bei der dargestellten Verbindung der Schraubenfeder 1 mit dem Untergrund 2 der Fall ist.

Auf dem Untergrund 2 liegt eine Grundplatte 3 auf, die beispielsweise aus faserverstärktem Kunststoff, z.B. Polyamid, gefertigt ist. Der Anteil der Fasern, beispielsweise Glasfasern, kann dabei etwa 15 bis 30 Gewichtsprozent betragen und die Faserlänge liegt etwa zwischen 2 und 20 mm. Die Grundplatte 3 besitzt normalerweise eine ebene Unterseite, mit der sie auf dem Untergrund 2 vollflächig aufliegt. Die Oberseite der Grundplatte 3 verläuft zunächst geneigt und ist in sich gedreht. Dabei verlaufen die beiden Endbereiche der Grundplatte 3 unter einem entgegengesetzt geneigten Winkel, wobei dieser Winkel genau dem Winkel der Steigung der Schraubenfeder 1 entspricht. Dies ist in den Figuren 1 und 2 deutlich zu erkennen.

Die Schraubenfeder 1 weist über ihre gesamte Länge eine gleichmäßig verlaufende Steigung auf, d.h., die jeweils letzte Windung an beiden Enden der Schraubenfeder 1 wurde bei der Formgebung nicht beigelegt und nicht plangeschliffen, so daß die Schraubenfeder 1 keine ebene, senkrecht zur Achse der Schraubenfeder 1 verlaufende Anschlußfläche aufweist. Die Schraubenfeder 1 wurde lediglich an ihren beiden Enden, von denen in der Zeichnung nur das untere Ende gezeigt ist, annähernd senkrecht zur Achse der Windung abgeschnitten, so daß die in Fig. 1 zu erkennende Endfläche 4 entstanden ist.

Die so geformte, also keine besonderes geformten Endbereiche aufweisende Schraubenfeder 1 wird nun in entsprechend angeordnete Nuten 5, 6 mit sektorförmigem Querschnitt der Grundplatte 3 eingelegt, die an zwei sich gegenüberliegenden Endbereichen der Grundplatte 3 ausgebildet sind. Der Querschnitt dieser Nuten 5, 6 entspricht dabei genau einem Teilquerschnitt der Schraubenfeder 1, so daß die Schraubenfeder 1 ohne jegliche sichtbare Verformung in die Nuten 5, 6 eingelegt werden kann. Während die Nut 6 sich über die gesamte Breite der Grundplatte 3 erstreckt, ist die Nut 5 an ihrer tiefsten Stelle mit einem durch eine Wandung gebildeten Anschlag 7 versehen, an dem die freie Stirnfläche des Windungsendes der Schraubenfeder zum Anliegen kommt, wie dies die Fig. 1 erkennen läßt.

Sobald die Schraubenfeder 1 ihre diesbezügliche Lage in den Nuten 5, 6 der Grundplatte 3 eingenommen hat, wird über die Grundplatte 3 eine Klemmplatte 8 gelegt, bei der die der Grundplatte 3 zugewandte Fläche in gleicher Weise wie die oberere Fläche der Grundplatte 3 und damit mit derselben deckungsgleich ausgebildet ist. Dies bedeutet, daß die Klemmplatte 8 ebenfalls sektorförmigen Querschnitt aufweisende Nuten 5a, 6a besitzt, die in der Fig. 1 der Zeichnung nur angedeutet sind. Im Gegensatz zur Grundplatte 3 ist bei der Klemmplatte 8 die Nut 5a jedoch durchgehend ausgebildet, d.h., hier ist normalerweise kein Anschlag vorhanden, der dem Anschlag 7 am Ende der Nut 5 der Grundplatte 3 entspricht. Bedarfsweise kann jedoch auch hier ein solcher Anschlag vorgesehen sein. Ferner ist es möglich, den Anschlag 7 in der Nut 5 wegfallen zu lassen und einen entsprechenden Anschlag in der Nut 5a vorzusehen.

Die Klemmplatte 8 wird nun so auf die Grundplatte 3 gelegt, daß die Windung der Schraubenfeder 1 in die Nuten 5a, 6a einrastet. In dieser eingerasteten Lage ist zwischen der Grundplatte 3 und der Klemmplatte 8 ein in der Fig. 1 der Zeichnung erkennbarer Spalt 9 vorhanden. Dieser Spalt 9 ermöglicht es, daß die Klemmplatte 8 fest mit der Grundplatte 3 verspannt und damit die Schraubenfeder 1 zwischen der Grundplatte 3 und der Klemmplatte 8 - jeweils in den Nuten 5, 5a und 6, 6a - eingeklemmt und festgespannt werden kann (Fig. 1). Damit ist die Lage der Schraubenfeder 1 unverrückbar gesichert. Die Grundplatte 3 ist mit der Klemmplatte 8 über jeweils eine nahe den Nuten 5, 5a und 6, 6a angeordnete Schraube 10 mit Mutter 11 verspannbar. Zur besseren Klarheit der Darstellung ist in der Fig. 1 der Zeichnung nur eine Schraube 10 mit Mutter 11 eingezeichnet. Die Schraube 10 kann nun, je nach Bedarf, nur die Klemmplatte 8 mit der Grundplatte 3 verbinden. Dies hat dann zur Folge, daß die Grundplatte 3 über getrennte Befestigungsmittel auf dem Untergrund 2 gesichert werden muß. Es ist jedoch auch möglich, die Schrauben 10 im Untergrund 2 zu sichern, so daß dieselben sowohl zur spannenden Verbindung von Klemmplatte 8 und Grundplatte 3 als auch zur Befestigung der Grundplatte 3 und damit der Schraubenfeder 1 auf dem Untergrund 2 dienen. Bedarfsweise kann die Grundplatte 3 auch entsprechende, mit Gewinde versehene Bohrungen aufweisen, in die entsprechende Schrauben 10 zur Sicherung der Klemmplatte 8 auf der Grundplatte 3 und damit zum Festspannen der Schraubenfeder 1 eingedreht werden können.

In Abänderung des erläuterten Ausführungsbeispieles können die Grundplatte 3 und die Klemmplatte 8 auch aus einem anderen Werkstoff, beispielsweise Stahl oder Aluminium, bestehen.

## Patentansprüche

1. Spielgerät für Kinderspielplätze oder dergleichen, bestehend aus einer mit einem Ende senkrecht auf einem festen Untergrund gesicherten Schraubenfeder, an deren anderem Ende ein Tragkörper mit einem Sitz und einem Haltegriff befestigt ist,
**dadurch gekennzeichnet,**
**daß** zwischen dem Untergrund (2) und der Schraubenfeder (1) und/oder zwischen dem Tragkörper und der Schraubenfeder (1) eine Grundplatte (3) mit zwei in Höhe der halben Steigung der Schraubenfeder (1) mit Abstand gegeneinander versetzten Nuten (5, 6) mit sektorförmigem, dem Querschnitt der Schraubenfeder (1) angepaßtem Querschnitt angeordnet ist, daß der Grundplatte (3) eine gegen dieselbe spannbare Klemmplatte (8) mit ebenfalls zwei entsprechend den Nuten (5, 6) der Grundplatte (3) als Gegenstück geformten Nuten (5a, 6a) zugeordnet ist und daß das freie Ende der Schraubenfeder (1) weitgehend verformungsfrei in den Nuten (5, 5a, 6, 6a) zwischen der Grundplatte (3) und der Klemmplatte (8) einspannbar ist.

2. Spielgerät nach Anspruch 1,
**dadurch gekennzeichnet, daß** die ein freies Ende der Schraubenfeder (1) aufnehmende Nut (5) einen Anschlag (7) für die freie Stirnfläche (4) des Federkörpers aufweist.

3. Spielgerät nach Anspruch 2,
**dadurch gekennzeichnet,**
**daß** der Anschlag (7) an der Grundplatte (3) und/oder an der Klemmplatte (8) ausgebildet ist.

4. Spielgerät nach Anspruch 3,
**dadurch gekennzeichnet,**
**daß** der Anschlag (7) einstückig mit der Grundplatte (3) und der Klemmplatte (8) ausgebildet ist.

5. Spielgerät nach mindestens einem der Ansprüche 1 bis 4,
**dadurch gekennzeichnet,**
**daß** die Klemmplatte (8) über mindestens eine Spannschraube (10) mit der Grundplatte (3) verbindbar ist.

6. Spielgerät nach Anspruch 5,
**dadurch gekennzeichnet,**
**daß** die Spannschraube (10) durch eine der Befestigung der Grundplatte (3) auf dem Untergrund (2) und/oder an dem Tragkörper dienende Schraube gebildet ist.

7. Spielgerät nach mindestens einem der Ansprüche 1 bis 6,
**dadurch gekennzeichnet,**
**daß** die Grundplatte und/oder die Klemmplatte aus Kuststoff gebildet ist.

8. Spielgerät nach Anspruch 7,
**dadurch gekennzeichnet,**
**daß** der Kunststoff mit Fasern abgefüllt ist.

## Claims

1. Play unit for children's playgrounds or the like, comprising a helical spring which has one end secured vertically on a fixed underlying surface, and at the other end of which is fastened a supporting body with a seat and a handle, **characterized in that** arranged between the underlying surface (2) and the helical spring (1) and/or between the supporting body and the helical spring (1) is a base plate (3) with two grooves (5, 6) which are offset in relation to one another, at a distance apart, over the height of half the pitch of the helical spring (1) and has a sector-like cross section adapted to the cross section of the helical spring (1), **in that** the base plate (3) is assigned a clamping plate (8) which can be clamped against the same and likewise has two grooves (5a, 6a) shaped, as counterparts, in a manner corresponding to the grooves (5, 6) of the base plate (3), and **in that** the free end of the helical spring (1) can be clamped, largely without deformation, in the grooves (5, 5a, 6, 6a) between the base plate (3) and the clamping plate (8).

2. Play unit according to Claim 1, **characterized in that** the groove (5), which accommodates a free end of the helical spring (1) has a stop (7) for the free end surface (4) of the spring body.

3. Play unit according to Claim 2, **characterized in that** the stop (7) is formed on the base plate (3) and/or on the clamping plate (8).

4. Play unit according to Claim 3, **characterized in that** the stop (7) is formed integrally with the base plate (3) and the clamping plate (8).

5. Play unit according to at least one of Claims 1 to 4, **characterized in that** the clamping plate (8) can be connected to the base plate (3) via at least one clamping screw (10).

6. Play unit according to Claim 5, **characterized in that** the clamping screw (10) is formed by a screw which serves for fastening the base plate (3) on the underlying surface (2) and/or on the supporting body.

7. Play unit according to at least one of Claims 1 to 6, **characterized in that** the base plate and/or the clamping plate are/is formed from plastic.

8. Play unit according to Claim 7, **characterized in that** the plastic is filled with fibres.

## Revendications

1. Dispositif de jeu pour terrains de jeux pour enfants ou analogues, se composant d'un ressort hélicoïdal fixé par une extrémité verticalement sur un support fixe, à l'autre extrémité duquel est fixé un corps porteur avec un siège et une poignée de maintien,
**caractérisé en ce que**,
entre le support (2) et le ressort hélicoïdal (1) et/ou entre le corps porteur et le ressort hélicoïdal (1), on dispose une plaque de base (3) avec deux rainures (5, 6) décalées l'une par rapport à l'autre d'une certaine distance à une hauteur d'un demi-pas du ressort hélicoïdal (1) avec une section transversale en forme de secteur, adaptée à la section transversale du ressort hélicoïdal (1), **en ce que** l'on associe à la plaque de base (3) une plaque de serrage (8) pouvant être serrée contre celle-ci, avec également deux rainures (5a, 6a) formées en tant que pièces conjuguées correspondant aux rainures (5, 6) de la plaque de base (3), et **en ce que** l'extrémité libre du ressort hélicoïdal (1) peut être serrée essentiellement sans déformation dans les rainures (5, 5a, 6, 6a) entre la plaque de base (3) et la plaque de serrage (8).

2. Dispositif de jeu selon la revendication 1,
**caractérisé en ce que**
la rainure (5) recevant une extrémité libre du ressort hélicoïdal (1) présente une butée (7) pour la face frontale libre (4) du corps de ressort.

3. Dispositif de jeu selon la revendication 2,
**caractérisé en ce que**
la butée (7) est réalisée sur la plaque de base (3) et/ou sur la plaque de serrage (8).

4. Dispositif de jeu selon la revendication 3,
**caractérisé en ce que**
la butée (7) est réalisée d'une pièce avec la plaque de base (3) et la plaque de serrage (8).

5. Dispositif de jeu selon l'une quelconque des revendications 1 à 4,
**caractérisé en ce que**
la plaque de serrage (8) peut être connectée par le biais d'au moins une vis de serrage (10) à la plaque de base (3).

6. Dispositif de jeu selon la revendication 5,
**caractérisé en ce que**
la vis de serrage (10) est formée par une vis servant à la fixation de la plaque de base (3) sur le support (2) et/ou sur le corps porteur.

7. Dispositif de jeu selon l'une quelconque des revendications 1 à 6,
**caractérisé en ce que**
la plaque de base et/ou la plaque de serrage sont fabriquées en matière plastique.

8. Dispositif de jeu selon la revendication 7,
**caractérisé en ce que**
la matière plastique est remplie de fibres.
